# EUROPEAN PATENT APPLICATION

(11) **EP 1 410 934 A1**
(43) Date of publication of application: **21.04.2004**
(21) Application number: 03020583.5
(22) Date of filing: 18.09.2003
(51) Int. Cl.: B60J 7/08

(54) **Tarpaulin system for covering and uncovering, especially for a freight vehicle**

(30) Priority: 14.10.2002 IT TV20020115
(71) Applicant: Miglioranza, Damiano, 31100 Treviso (IT)
(72) Inventor: Miglioranza, Damiano, 31100 Treviso (IT)
(74) Representative: Modiano, Guido, Dr.-Ing.

(57) **Abstract**

A device for covering and uncovering a body (2), particularly of a goods vehicle, the body comprising two sides (3a,3b), mutually connected by a first rear wall (4a) and by a second front wall (4b), to which a first arm (10a) and a second arm (10b) are pivoted respectively; the first and second free ends of the first and second arms (10a,10b) are mutually connected by an upper rod (12), with which the edge of a covering canopy (13) is associated longitudinally; at least one electric motor (16) being rigidly coupled to the first free end of the first arm and its driving shaft being keyed to the rod; at least one pulley being further associated with the rod and interacting with elements for controlling and/or retracting the rod.

## Description

The present invention relates to a device for covering and uncovering a body, particularly of a goods vehicle, such as a tractor-trailer or truck-trailer.

Currently it is known to cover a body by means of one or more canopies made of waterproof material and arranged on a tubular frame that protrudes above said body.

Such canopies are usually associated with the sides and walls of the body by means of a plurality of cords or elastic cables, suitably guided within appropriately provided hooks or holes formed at the edges of the sides and of the canopies.

The main drawback of this known type of covering and uncovering device is that removing the canopies in order to allow goods loading and/or unloading is very slow and difficult.

This is due substantially to the fact that once the elastic cables have been removed from the hooks, it is necessary to lift the canopy of one side until it is arranged above the canopy or canopy portion that covers the opposite side.

Further, the procedure commonly used to remove or move the canopies is complicated and requires the use of a plurality of operators and considerable effort on their part.

As a partial remedy to the above-mentioned drawbacks, a device for covering and uncovering a body is known which comprises two arms that are pivoted respectively to the rear wall and to the front wall of the body.

An upper rod is rotatably associated between the free ends of the arms, and a pneumatic motor, adapted to actuate the rotation of the rod, is keyed to the rod.

The edge of a covering canopy is associable along the longitudinal axis of the rod, so that a clockwise rotation of the rod rolls up the canopy onto the rod and therefore uncovers one side, for example the right side, and the upper part of the body.

A first end of a pneumatic piston is associated at an intermediate point of each arm; said piston is pivoted, at its second end, to the respective rear or front wall of the body.

In this manner, a coordinated extension of the two pistons pivoted at the second end forces a rotation of the arms, and therefore a movement of the rod with respect to the body, so as to achieve the unrolling of the previously rolled-up canopy and therefore cover the body.

In this operation it is important that the first motor, keyed to the rod, must remain inactive and idle, without opposing resistance to the unrolling of the canopy.

For this reason, as mentioned, a pneumatic motor is used rather than, for example, an electric motor or another type of motor.

This conventional covering and uncovering device, however, has the disadvantage of being very complicated and expensive; it also requires the presence of a fixed stringer so as to form the ridge of the covering.

Another important drawback is that this conventional covering and uncovering device is easily subject to malfunctions and requires careful and frequent maintenance.

Moreover, there is still the drawback constituted by the fact that completely uncovering the body is very long and difficult and therefore can be performed only when it is indispensable for the positioning or removal of the goods.

This is due substantially to the fact that at the left side of the body, in addition to the connection provided by means of the elastic cord, it is necessary to achieve a further interconnection, of the temporarily removable type, for example by positioning a pin within seats of the canopy and of the side formed along the entire length of the body.

Such pin is adapted to prevent the rotation of the pneumatic motor from tensioning the elastic cables and must be removed manually if one wishes to uncover the body completely.

This operation is particularly long and difficult, especially when the body is full, since the pin usually slides on the inside of the side and cannot be accessed from the outside.

A further disadvantage is that rolling up the canopy on the rod often entails problems, such as the formation of creases or incorrect rolling-up.

Another drawback is that during the uncovering of the body there is sometimes the problem of accidental reengagement of the elastic cable previously released from the hooks.

The elastic cable, which hangs from the canopy, is in fact subject, during canopy roll-up, to becoming tangled again in one or more of the hooks of the side to which it was connected earlier.

Accordingly, a dangerous situation can occur both for the uncovering device and most of all for people in the vicinity of the body.

This drawback is worsened by the fact that the actuation means designed to activate and deactivate the covering and uncovering device are usually arranged in a position from which the side cannot be viewed, since they are arranged for example inside the driver's cab of the vehicle or on the opposite side of the body.

The aim of the present invention is to solve the above-mentioned problems, eliminating the drawbacks of the cited known art, by providing a device for covering and uncovering the body of a vehicle that is quick and easy to activate.

Within this aim, an object of the invention is to provide a device that allows to access the goods contained in the body from both sides.

Another object is to provide a device that is sturdy and scarcely subject to malfunctions.

Another object is to provide a device that is structurally simple and has low manufacturing costs.

This aim and these and other objects that will become better apparent hereinafter are achieved by a device for covering and uncovering a body, particularly of a goods vehicle, which comprises two sides, advantageously mutually connected by a first rear wall and by a second front wall, to which a first arm and a second arm are pivoted respectively, the first and second free ends of said arms being mutually connected by an upper rod, with which the edge of at least one covering canopy is associated longitudinally, characterized in that it comprises at least one electric motor that is rigidly coupled to said first free end of said first arm and whose driving shaft is keyed to said rod, at least one pulley being associated with said rod and interacting with means for retracting said rod.

Further characteristics and advantages of the invention will become better apparent from the following detailed description of a particular embodiment thereof, illustrated by way of non-limitative example in the accompanying drawings, wherein:
Figures 1 to 3 are perspective views of three successive steps of the uncovering of a body by means of the invention;
Figure 4 is a perspective view of the body after the return of the rod to the covering position, before lowering the lateral flap;

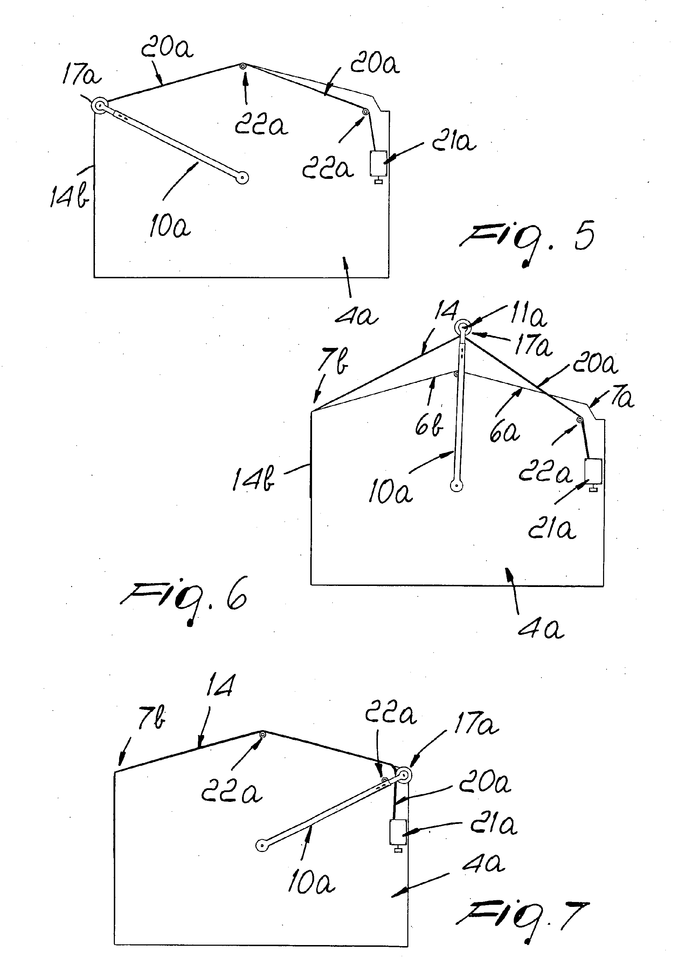

Figures 5 to 7 are rear views of three successive steps of the covering of the body;
Figure 8 is a sectional side view of the shape of the rod, provided with a slot for the interconnection of the edge of the covering canopy;
Figures 9 to 12 are rear views of the details of four successive steps of the uncovering of the body;
Figures 13 and 14 are respectively a top sectional view and a side view of the end of the rod provided with the electric motor and with the belt winding pulley;

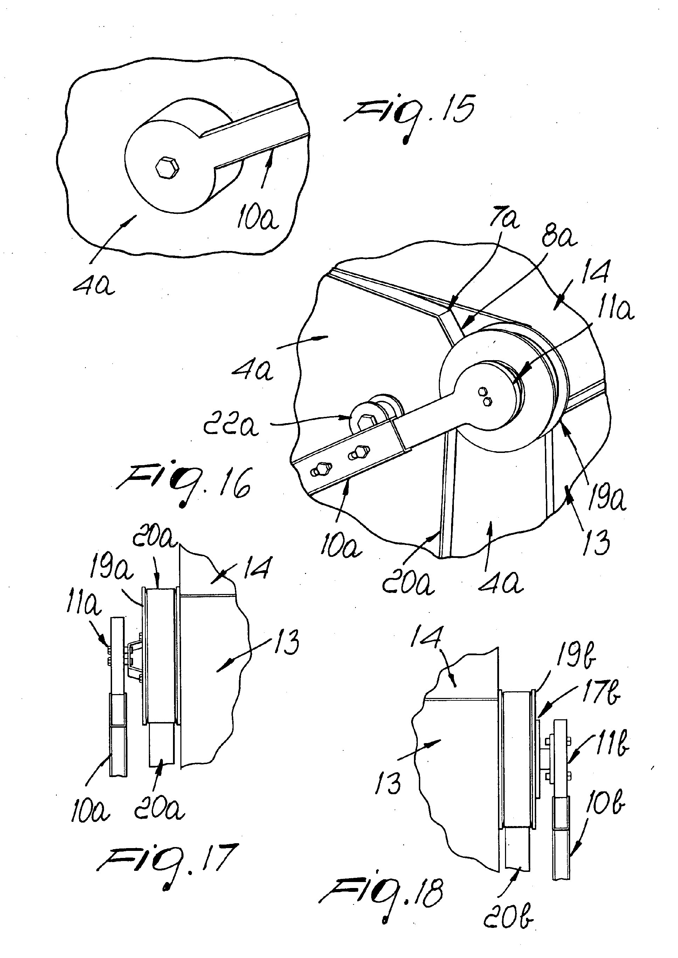

Figures 15 and 16 are perspective views of two details of the rear arm;
Figures 17 and 18 are side views of the second and first pulleys, respectively.

In the examples of embodiment that follow, individual characteristics, given in relation to specific examples, may actually be interchanged with other different characteristics that exist in other examples of embodiment.

With reference to the figures, the reference numeral 1 designates a device for covering and uncovering a body 2 that is part for example of a vehicle, not shown, such as a goods truck.

The body 2 comprises two sides, such as a right side 3a and a left side 3b, which protrude from the lower region or bottom of the body 2.

The sides 3a and 3b are advantageously mutually connected by a first rear wall or infilling 4a and by a second front wall or infilling 4b.

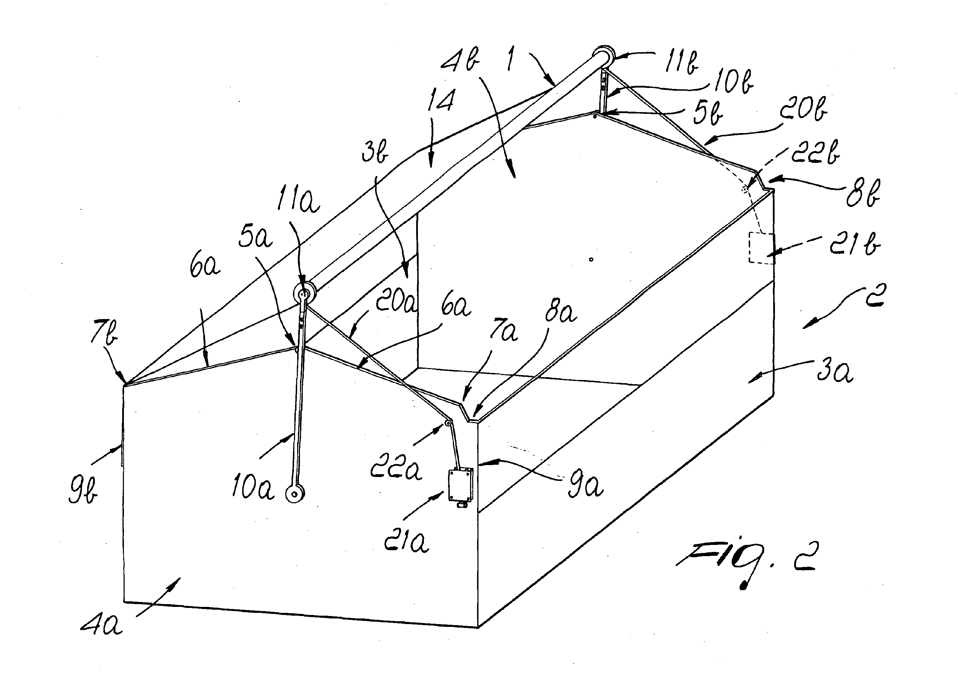

The first and second walls 4a and 4b are preferably higher than the sides, and in the embodiment shown in the figures merely by way of example the walls 4a and 4b have an advantageously pentagonal shape, in which the upper vertices, designated by the reference numerals 5a and 5b in Figure 2, lie on the vertical plane that passes through the central axis that lies longitudinally to the bottom of the body 2.

Figure 2 shows that two sides 6a and 6b for connection to respective lateral corners 7a and 7b extend from the vertex 5a of the wall 4a.

The right lateral corner 7a, in this embodiment, delimits a first recess 8a, which is approximately L-shaped and forms a flat base for connection to a first lateral shoulder 9a of the first wall 4a.

Advantageously, the second wall 4b is mirror-symmetrical with respect to the first wall 4a relative to a vertical plane that passes through the central transverse axis of the body 2, so as to form a second recess 8b.

A first arm 10a and a second arm 10b are respectively pivoted at a central region of the first and second walls 4a and 4b along their central vertical axis or altitude and are preferably straight.

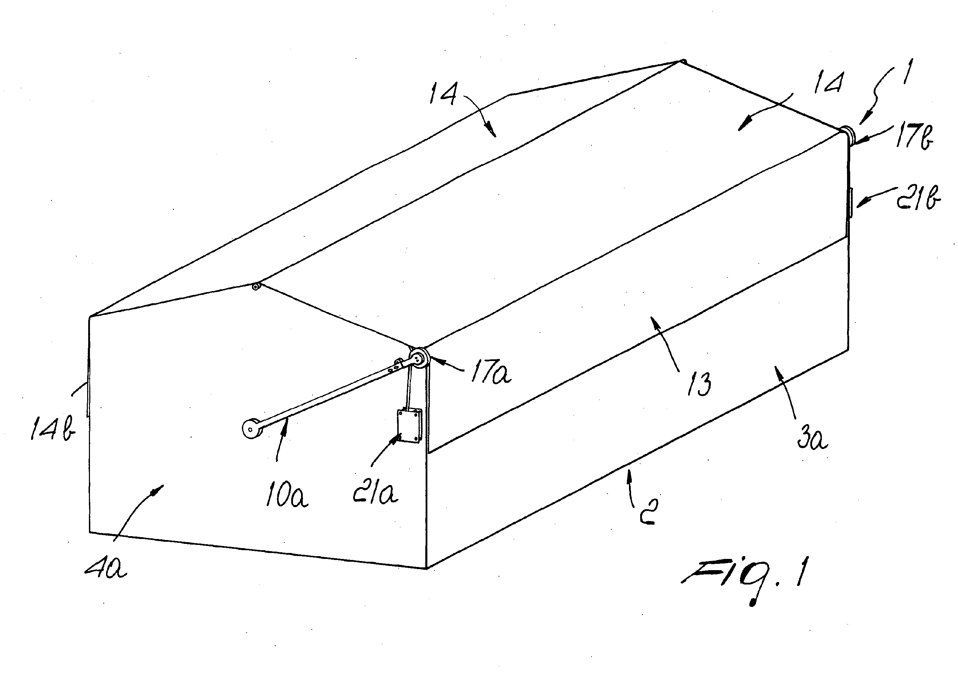

As shown in Figure 1, the lengths of the first and second arms 10a and 10b are such that the first and second free ends of said arms, designated by the reference numerals 11a and 11b, lie respectively proximate to the recesses 8a and 8b.

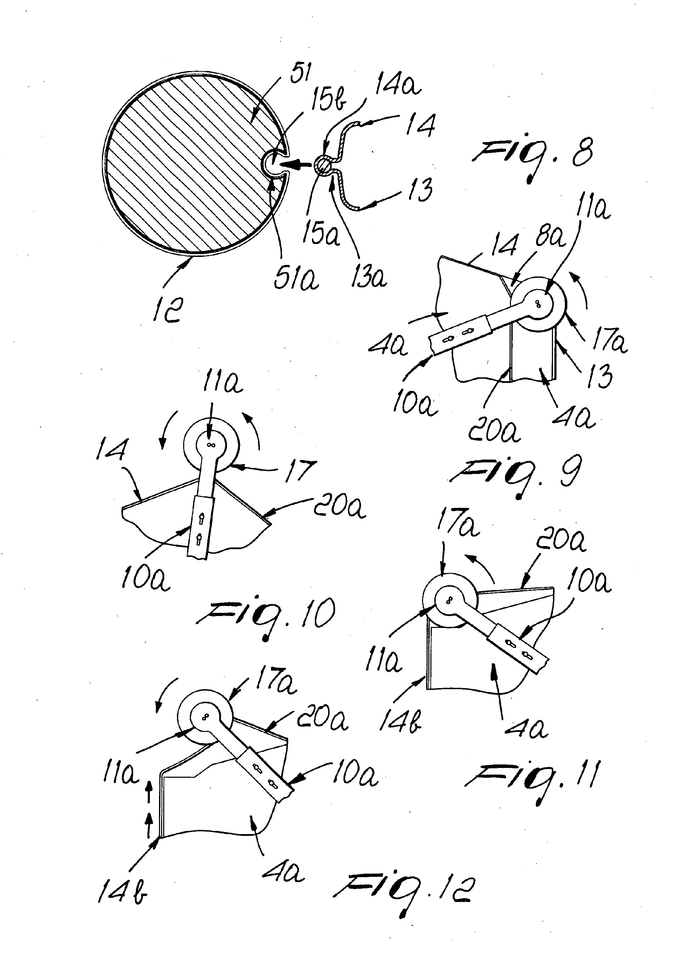

The first and second free ends 11a and 11b are mutually connected by means of a straight rod 12, with which a first edge and a second edge, designated by the reference numerals 13a and 14a in Figure 8, of first and second covering canopies, designated by the reference numerals 13 and 14, are associated longitudinally.

The first canopy 13 is adapted to cover the right lateral region of the body 2 and therefore has a width that is approximately equal to the height of the first shoulder 9a, so that it can reach the right side 3a once the rod 12 has been arranged at the flat base of the first shoulder 9a.

The second canopy 14, which is larger than the first one, is adapted to cover the upper and lateral left region of the body 2, and therefore is approximately as wide as the pair of sides 6a and 6b plus the height of the second left shoulder, designated by the reference numeral 9b.

As shown in Figure 8, the interconnection of the first and second canopies 13 and 14 to the rod 12 can be provided advantageously by means of the coupling of a strip 15a to the first and second edges 13a and 14a, the entire assembly being adapted to be inserted within a complementarily shaped slot 15b formed longitudinally within the rod 12 along the generating surface.

The interconnection of the rod 12 to the first free end 11a of the first arm 10a is provided in turn, as shown in Figure 13, by way of the interposition of an electric motor 16, which is accommodated coaxially and approximately internally to the rod 12.

The electric motor 16 comprises a body 16a, which is provided with an end portion 50 that protrudes outside the rod 12, so as to associate itself nonrotatably with the first free end 11a of the first arm 10a.

The end part 50 of the body 16a is accommodated at least partially in a first hub 17a, which is arranged coaxially and is associated nonrotatably with the rod 12.

In the first hub 17a, at least the internal surface, for contact with the body 16a of the electric motor 16, is made of materials having a low friction coefficient and is thus made for example of the material known by the tradename Teflon, so as to allow the free rotation of the first hub 17a with respect to the motor 16.

On the opposite side with respect to the end portion 50, a coaxial driving shaft 16b protrudes from the body 16a and is associated nonrotatably with the rod 12: the nonrotatable interconnection between the driving shaft 16b and the rod 12 can be achieved advantageously by interposing a disk-like element 51, which is monolithically coupled to the driving shaft 16b and is shaped approximately complementarily to the internal profile of the rod 12, as shown in Figure 8.

In particular, the disk-like element 51 has a recess 51a that is shaped approximately complementarily to the slot 15b, so as to constitute a means for transmitting the rotation of the driving shaft 16b to the rod 12.

On the opposite side, the rod 12 is associated with a second hub, designated by the reference numeral 17b in Figure 14, which accommodates a bearing 18 that is adapted for the rotary interconnection of the second free end 11b of the second arm 10b.

In this manner, an activation of the electric motor 16 according to a counterclockwise rotation of the driving shaft 16b produces a counterclockwise rotation of the rod 12, so as to roll up at least one first portion of the second canopy 14.

The connection of the second canopy 14 to the left side 3b, provided advantageously by way of snap-acting hooks and therefore without elastically deformable means such as elastic cords or cables, forces the movement of the first arm 10a, along a circular arc-like path from the corner 7a toward the corner 7b, simultaneously with the rotational movement of the rod 12.

During this movement, the second arm 10b is guided by the rod 12 along a rotation that is fully similar to the rotation of the first arm 10a, so as to ensure effective support of the rod 12.

The rotary motion of the rod 12 with respect to the first and second arms 10a and 10b is allowed by the free rotation of the first hub 17a with respect to the body 16a of the electric motor 16 and by the presence of the bearing 18.

The first and second hubs 17a and 17b comprise a first pulley and a second pulley, designated by the reference numerals 19a and 19b respectively, which interact with means for controlling the rotation of the rod 12 and for retracting it.

In particular, a first belt 20a and a second belt 20b wind around the first and second pulleys 19a and 19b and their ends, not shown, are associated respectively with a first tensioning device and a second tensioning device, designated by the reference numerals 21a and 21b.

Guiding elements 22a and 22b can be arranged advantageously along the path of the first and second belts 20a and 20b and are preferably constituted for example by pairs of wheels that are freely pivoted to the first and second walls 4a and 4b.

As an alternative, it is possible to provide, at the upper edge of the first and second walls 4a and 4b, respective supporting profiles for the first and second belts 20a and 20b, not shown.

In this manner, the first and second arms 10a and 10b, during the operation for uncovering the body 2, move in contrast with the traction force applied by the tensioning devices 21a and 21b: this ensures that the second canopy 14 is always taut during rolling-up.

Further, in the initial step of rolling-up, which is comprised between the positions shown in Figures 1 and 2, the first canopy 13 rolls up, opening the interspace arranged above the right side 3a, and part of the second canopy 14 also rolls up.

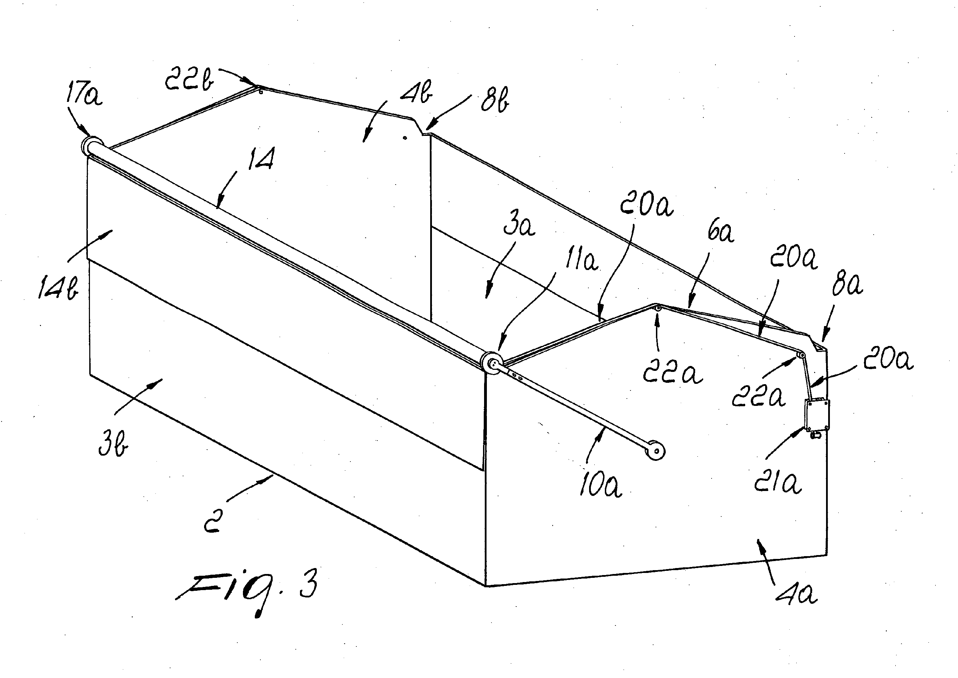

The first and second arms 10a and 10b then descend until they reach the position of Figure 3, in which the end portion, designated by the reference numeral 14b, of the second canopy 14 is still unrolled.

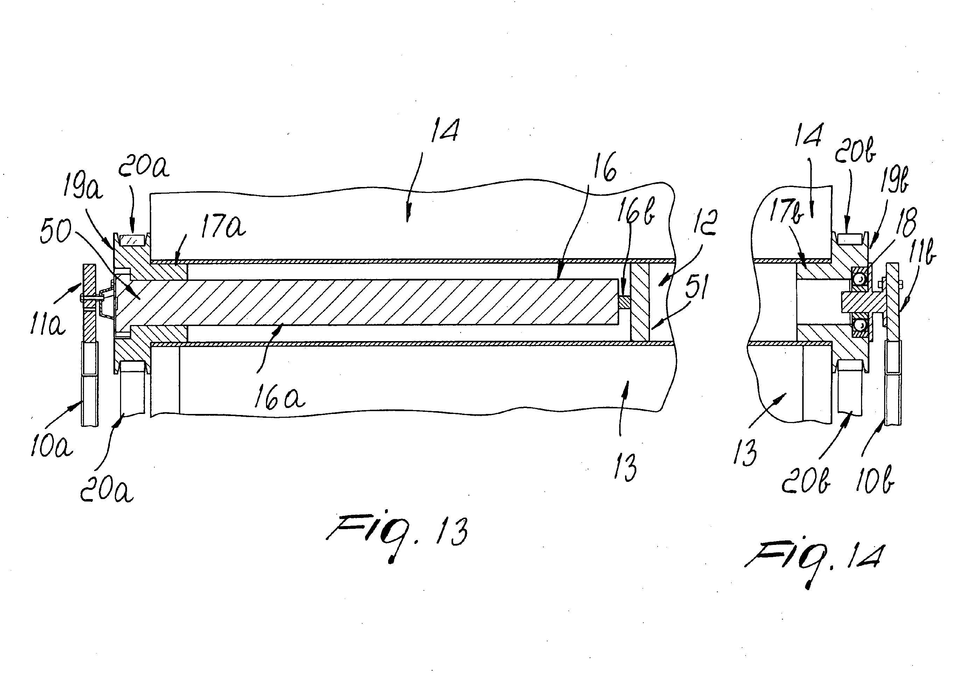

In this position, the first and second belts 20a and 20b are fully unrolled, as shown in Figure 11.

In this manner, after disengaging the lower edge of the second portion 14b from the left side 3b, a further rotation of the electric motor 16, again in the same direction, forces a winding up of the belts 20a and 20b in a direction that is the opposite of the preceding one, so as to achieve a clockwise rotation of the first and second arms 10a and 10b.

Accordingly, there is a return motion of the rod 12 toward the right side 3a, with automatic rolling up of the end portion 14b of the second canopy 14 (as shown initially in Figure 12).

In this manner, with a forward motion and a partial return motion of the rod 12, one achieves the uncovering of the entire body, both in an upper region and on both sides 3a and 3b.

The covering operation is achieved by means of an activation of the electric motor 16 according to a clockwise rotation of the driving shaft 16b, so as to force the rigidly coupled rod 12 to perform an identical clockwise rotation.

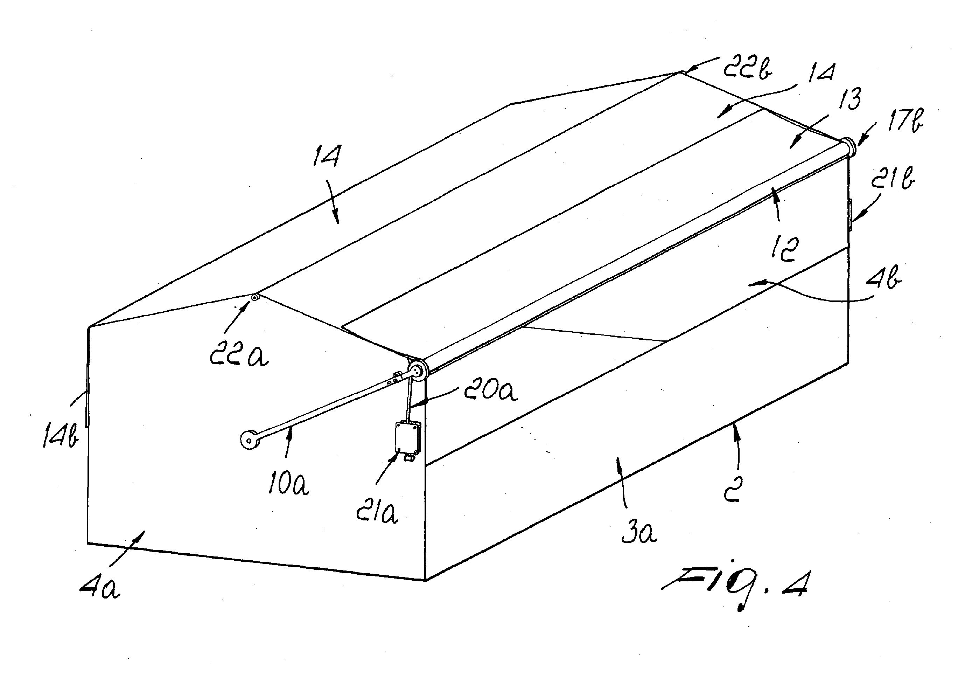

If the end portion 14b also has been rolled up earlier, a first counterclockwise rotation of the arms 10a and 10b occurs until the dead center of Figure 11 is reached; this is followed by a clockwise rotation until the position of Figure 4 is resumed.

The clockwise movement of the arms 10a and 10b is allowed by the presence of the retraction means of the rod 12, which are constituted by the first and second belts 20a and 20b.

During this movement, the pulleys 17a and 17b associated with the rod 12 in fact retract the first and second belts 20a and 20b.

Once the unrolling of the second canopy 14 has been completed, the first canopy 13 remains in a raised position, as shown in Figure 4; it can be repositioned manually, for example by activating a cord or another grip means, which is associated with the first canopy 13 at one end.

Operation is therefore as follows: with reference to Figures 1 to 4, the operator can uncover the entire body 2, or part thereof, by simply actuating the motor 16.

Once the circular arc from the first corner 7a to the second corner 7b has been completed, it is optionally possible to uncover the body 2 completely: for this purpose, it is sufficient to disconnect the second canopy 14 from the left side 3b and then restart the electric motor 16, so that the rod 12 reverses partially, rolling up the end portion 14b of the second canopy 14.

To unroll the second canopy 14, the operator must activate the motor 16 with a rotation that is the opposite of the preceding one and wait for the rod to arrange its ends at the first and second recesses 8a and 8b.

It is then possible to lower the first canopy 13 so as to cover the right side of the body 2.

It has thus been shown that the invention has achieved the intended aim and objects, a device for covering and uncovering the body of a vehicle having been provided which can be activated rapidly and very easily even by a single operator.

The invention allows to access the goods contained in the body from both sides, since it allows easy and complete removal of the first and second covering canopies.

The covering and uncovering device is very sturdy and, in view of its constructive simplicity, is scarcely subject to malfunctions or breakdowns.

Moreover, its manufacturing costs are limited, since it requires a single electric motor.

The fact of achieving the connection of the second canopy 14 to the left side 3b by way of mechanical means that are substantially not elastically deformable, such as for example closure levers or snap-acting hooks, allows to avoid the need for the presence of means for temporary interconnection between the canopy and the body, such as said pin.

The invention is of course susceptible of numerous modifications and variations, all of which are within the scope of the appended claims.

Thus, for example, it is possible to associate with the first and second arms two respective pneumatic pistons, so as to facilitate their retraction to the covering position.

It is also possible to use two electric motors, one for each arm, which are keyed respectively to the two ends of the rod.

It is also possible to provide the invention by way of a fixed connection of the body of the motor to the rod and a nonrotating connection of the driving shaft to the first free end of the first arm.

In this manner, a clockwise rotation of the driving shaft entails a counterclockwise rotation of the rod and a consequent counterclockwise movement of the first and second arms.

The means for controlling the rotation of the rod and for returning it can be constituted not only by one or two belts but, as an alternative, by an inextensible cable or cords, chains or other mechanical means that are adapted to transmit a force and to be retracted and/or returned within mechanical elements such as for example said pulleys.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The disclosures in Italian Patent Application No. TV2002A000115 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for covering and uncovering a body, particularly of a goods vehicle, comprising two sides, advantageously mutually connected by a first rear wall and by a second front wall, to which a first arm and a second arm are pivoted respectively, the first and second free ends of said arms being mutually connected by an upper rod, with which the edge of at least one covering canopy is associated longitudinally, **characterized in that** it comprises at least one electric motor that is rigidly coupled to said first free end of said first arm and whose driving shaft is keyed to said rod, at least one pulley being associated with said rod and interacting with means for controlling the rotation of said rod and/or retracting it.

2. The device according to claim 1, **characterized in that** said electric motor comprises a body that is provided with an end portion that protrudes axially and externally from said rod and is associated nonrotatably with said first free end of said first arm.

3. The device according to claims 1 and 2, **characterized in that** said end part of said body is accommodated at least partially in a first hub, which is arranged coaxially and is associated nonrotatably with said rod.

4. The device according to claims 1 and 3, **characterized in that** at least the internal surface of said first hub for contact with said body of said electric motor is made of materials having a low friction coefficient, so as to allow free mutual rotation of said body and said first hub.

5. The device according to claim 1, **characterized in that** said driving shaft protrudes from said electric motor on the opposite side with respect to said end portion of said body, so as to be associated nonrotatably with said rod.

6. The device according to claims 1 and 5, **characterized in that** said driving shaft, arranged coaxially within said rod, is associated or monolithically coupled to an element for nonrotatable connection to said rod that is preferably keyed internally to said rod.

7. The device according to claims 1 and 6, wherein said rod has a longitudinal slot for the interconnection of the edge of said at least one covering canopy, **characterized in that** said interconnection element is constituted by a disk-like element that is shaped approximately complementarily to the internal profile of said rod, so as to form a recess that constitutes a complementarily shaped seat for the profile of said longitudinal slot.

8. The device according to one or more of the preceding claims, **characterized in that** said rod is rotatably associated with said second free end of said second arm by way of the interposition of a second hub.

9. The device according to claims 1 and 8, **characterized in that** said second hub, associated nonrotatably with said rod, advantageously has a separate seat for accommodating at least one bearing that is adapted for the rotary interconnection of said second free end of said second arm.

10. The device according to one or more of the preceding claims, **characterized in that** when said electric motor is activated so as to produce a counterclockwise rotation of said driving shaft, an equal counterclockwise rotation of said rod occurs so as to roll up at least one first portion of said at least one covering canopy.

11. The device according to one or more of the preceding claims, wherein said at least one covering canopy comprises an end portion that lies opposite said edge for interconnection to said rod, **characterized in that** the temporary interconnection of said end portion to the respective side wall of said body is advantageously provided by way of mechanical interconnection means that are substantially not elastically deformable, such as closure levers and/or snap-acting hooks.

12. The device according to one or more of the preceding claims, **characterized in that** when said electric motor is activated so as to produce a counterclockwise rotation of said driving shaft, said first and second arms rotate counterclockwise so as to move said rod along a path shaped like a circular arc, from a first upper corner of said body toward the opposite upper corner.

13. The device according to claims 1, 9 and 10, **characterized in that** when said driving shaft undergoes a counterclockwise rotation, said rod moves along said circular arc-like path and simultaneously rotates about its own axis, so as to achieve the at least partial rolling up of said at least one covering canopy.

14. The device according to one or more of the preceding claims, **characterized in that** it comprises means for controlling the rotation of said rod and/or for retracting it, which interact with at least one first pulley that is associated with said first hub or formed therein.

15. The device according to one or more of the preceding claims, **characterized in that** it comprises means for controlling the rotation of said rod and/or for retracting it, which interact with at least one second pulley that is associated with said second hub or formed therein.

16. The device according to one or more of the preceding claims, **characterized in that** said means for controlling the rotation of said rod and/or for retracting it advantageously comprise a first tensioning device and/or a second tensioning device, which interact respectively with said first and/or second pulleys, which protrude externally to said rod at its ends.

17. The device according to claims 1 and 16, **characterized in that** said means for controlling the rotation of said rod and/or for retracting it advantageously comprise a first belt and/or a second belt, which are associable and can be wound at least partially on said first and/or second pulleys, whose ends are respectively associated with said first and/or second tensioning devices.

18. The device according to claims 1 and 17, **characterized in that** said first and/or second belts act on planes that are approximately perpendicular to the axis of said rod and interact selectively with one or more guides and/or supporting profiles that protrude from said first and/or second walls of said body.

19. The device according to one or more of the preceding claims, **characterized in that** said first and second arms, during the operation for uncovering said body, move in opposition to the traction force applied by said tensioning devices, so as to ensure the tensioning of said at least one canopy during the entire rolling-up step.

20. The device according to one or more of the preceding claims, **characterized in that** said first and/or second belts, at the end of said circular arc-like path traced by said rod, are completely unwound from said first and/or second pulleys.

21. The device according to claims 1 and 16, **characterized in that** said means for controlling the rotation of said rod and/or for retracting it advantageously comprise a first belt and/or a second belt, which are associable with said first and/or second pulleys and can be wound thereon at least partially, being directly associated with their ends in two fixed points of said first and/or second walls of said body.

22. The device according to one or more of the preceding claims, wherein said at least one canopy has an end portion for at least partially covering one side of said body, **characterized in that** at the end of said circular arc-like path traced by said rod an additional counterclockwise rotation of said driving shaft forces a winding of said first and/or second belts in a direction that is the opposite of the preceding one, so as to achieve a clockwise rotation of said first and second arms.

23. The device according to claims 1 and 22, **characterized in that** the winding of said first and/or second belts in the opposite direction forces a return motion of said rod toward the initial position, so as to achieve the automatic roll-up of said end portion of said at least one canopy.

24. The device according to one or more of the preceding claims, **characterized in that** when complete uncovering has occurred, a clockwise rotation of said driving shaft entails an unwinding of said first and/or second belts, so as to achieve the unrolling of said end portion of said at least one canopy.

25. The device according to one or more of the preceding claims, **characterized in that** when said end portion of said at least one canopy is completely unrolled, a clockwise rotation of said driving shaft entails a winding of said first and/or second belts within said first and/or second pulleys and the simultaneous unrolling of said at least one covering canopy, so as to cover said body.

26. A device for covering and uncovering a body, particularly of a goods vehicle, comprising two sides that are advantageously mutually connected by a first rear wall and by a second front wall, to which a first arm and a second arm are respectively pivoted, the first and second free ends of said arms being mutually connected by an upper rod with which the edge of at least one covering canopy is longitudinally associated, **characterized in that** it comprises at least one electric motor, which is keyed to said rod and whose driving shaft is monolithically coupled to said first free end of said first arm, at least one pulley being associated with said rod and interacting with means for controlling the rotation of said rod and/or for retracting it.
